# EUROPEAN PATENT SPECIFICATION

(11) **EP 4 099 488 B1**
(45) Date of publication and mention of the grant of the patent: **13.05.2026**
(21) Application number: 21872699.0
(22) Date of filing: 30.07.2021
(51) Int. Cl.: H01M 50/204, H01M 50/507, H01M 50/691

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 22.09.2020 KR 20200122292
(43) Date of publication of application: 07.12.2022
(73) Proprietor: LG Energy Solution, Ltd., Seoul 07335 (KR)
(72) Inventor: JEON, Hyun Wook, Daejeon 34122 (KR)
(74) Representative: Plasseraud IP
(86) International application number: PCT/KR2021/009946
(87) International publication number: WO 2022/065666

(56) References cited:
- EP-A1- 2 760 075
- WO-A1-2020/110449
- CN-U- 210 167 432
- CN-U- 210 167 432
- JP-A- 2011 195 069
- JP-A- 2014 160 677
- JP-B2- 5 643 468
- KR-A- 20200 102 292

## Description

### [TECHNICAL FIELD]

### Cross Citation with Related Application(s)

This application claims the benefit of Korean Patent Application No. 10-2020-0122292 filed on September 22, 2020 with the Korean Intellectual Property Office.

The present disclosure relates to a battery module and a battery pack including the same, and more particularly, to a battery module for preventing a short circuit between busbars, and a battery pack including the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, a method of configuring a battery module composed of at least one battery cell and then adding other components to at least one battery module to configure a battery pack is common.

The battery module may include a battery cell stack in which a plurality of battery cells are stacked, a module frame for housing the battery cell stack, and an end plate for covering the front and rear surfaces of the battery cell stack.

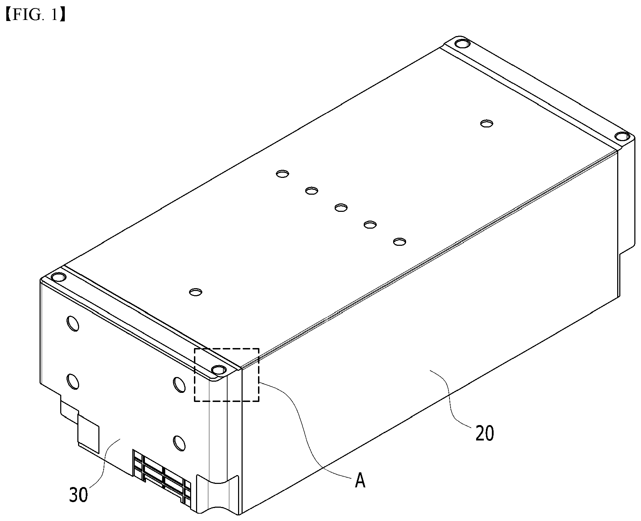

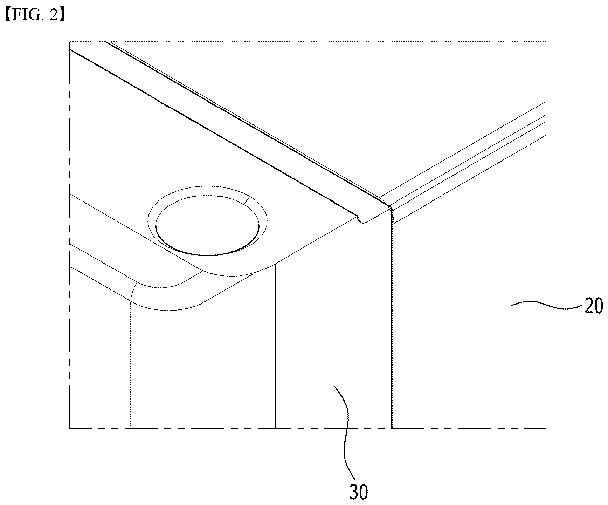

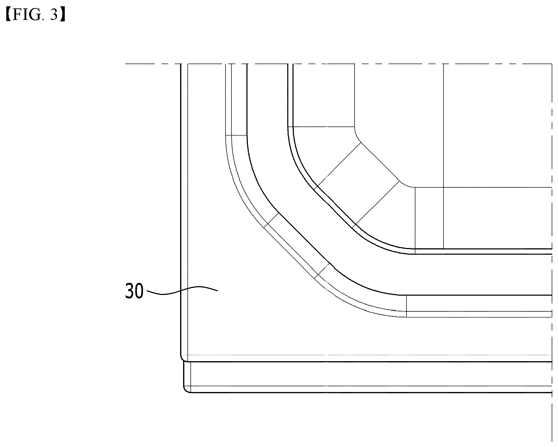

Fig. 1 is a perspective view showing a bottom part of a conventional battery module. Fig. 2 is an enlarged view of a section A of Fig. 1. Fig. 3 is a diagram viewed from the inside surface of the end plate.

Referring to Figs. 1 to 3, the conventional battery module may include a module frame 20 for housing the battery cell stack, and an end plate 30 for covering the front and rear surfaces of the battery cell stack. At this time, as shown in Fig. 3, it can be confirmed that a separate water discharge structure does not exist on the end plate. When the battery module does not have a water discharge structure, moisture may flow into the battery module from the outside. Further, water vapor flown into the battery module may be condensed to generate a condensed water. Further, the electrolyte solution may leak from the battery cell, and the leaked electrolyte solution may be seated inside the module frame.

When liquid is generated inside the battery module in this way, the busbars connected to the battery cells may be immersed by a liquid. While the immersed busbars being corroded, a short circuit phenomenon between busbars may occur. When a short circuit phenomenon occurs, a fire may occur due to the short circuit, and the performance of the battery module may be deteriorated.

WO2020110449A1 discloses a battery module. EP2760075A1 discloses a battery system with housing. CN210167432U discloses a drainage and ventilation structure in galvanic pile.

### [DETAILED DESCRIPTION OF THE INVENTION]

### [Technical Problem]

It is an object of the present disclosure to provide a battery module that includes a structure for discharging a liquid inside the battery module.

The objects of the present disclosure are not limited to the aforementioned objects, and other objects which are not described herein should be clearly understood by those skilled in the art from the following detailed description.

### [Technical Solution]

According to one embodiment of the present disclosure, there is provided a battery module, as defined in the attached set of claims, comprising: a battery cell stack in which a plurality of battery cells are stacked; a module frame for housing the battery cell stack; and an end plate for covering the front and rear surfaces of the battery cell stack, wherein a drainage channel is formed at both-side lower end corner parts of the end plate meeting with the module frame.

A portion where the end plate and the module frame meet, excluding the portion where the drainage channel is formed, may be joined by welding.

The drainage channel is formed so as to have a first slope toward the outside corner part of the lower end of the end plate, and an inside lower end part of the end plate connected to the drainage channel is formed so as to have a second slope toward the drainage channel.

The first slope has a larger slope angle than the second slope.

The drainage channel is formed from the inside corner part of the lower end of the end plate toward the outside corner part of the lower end.

A rim part formed protrusively toward the module frame may be formed on the edge part of the end plate, and the drainage channel may be formed in the rim part.

An insulating cover may be formed between the battery cell stack and the end plate, and an inside lower end part of the end plate may be formed on the lower side of the insulating cover.

A busbar frame is formed on the front and rear surfaces of the battery cell stack, and the busbar frame is connected to an upper portion of an inside lower end part of the end plate.

A plurality of busbars may be mounted on the outside surface of the busbar frame, and the plurality of busbars may be connected to an upper portion of the inside lower end part.

According to one embodiment of the present disclosure, there is provided a battery pack comprising: the above-mentioned battery module according, and a drainage device connected to the drainage channel of the battery module.

### [ADVANTAGEOUS EFFECTS]

In a battery module and a battery pack including the same according to embodiments of the present disclosure, a drainage channel can be formed in both-side lower end corner parts of the end plate to discharge a liquid inside the battery module to the outside.

### [BRIEF DESCRIPTION OF THE DRAWINGS]

Fig. 1 is a perspective view showing a bottom part of a conventional battery module;
Fig. 2 is an enlarged view of a section A of Fig. 1;
Fig. 3 is a diagram viewed from the inside surface of the end plate;
Fig. 4 is a perspective view showing a bottom part of a battery module according to one embodiment of the present disclosure;
Fig. 5 is a diagram showing parts inserted into the module frame of Fig. 4;
Fig. 6 is an enlarged view of a section B of Fig. 4;
Fig. 7 is a plan view showing the inside surface of the end plate according to one embodiment of the present disclosure; and
Fig. 8 is a perspective view showing an inside surface of the end plate according to one embodiment of the present disclosure.

### [DETAILED DESCRIPTION OF THE EMBODIMENTS]

It should be appreciated that the exemplary embodiments, which will be described below, are illustratively described to assist in the understand the present disclosure. In the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

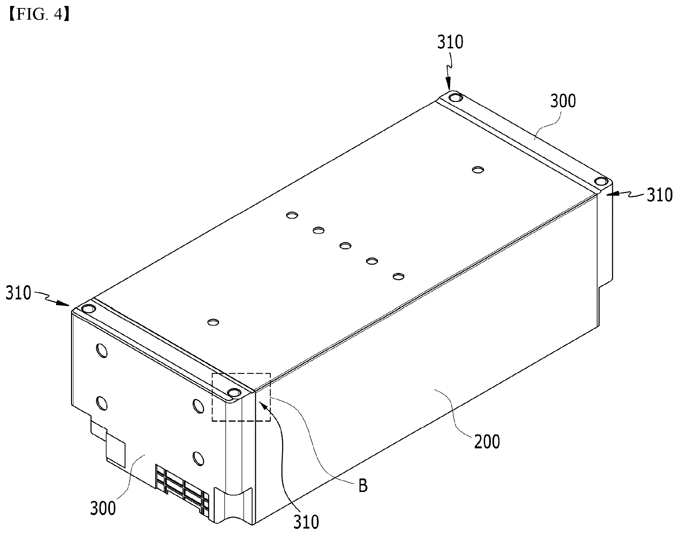

Hereinafter, a battery module having a drainage channel according to one embodiment of the present disclosure will be described with reference to Figs. 4 to 6.

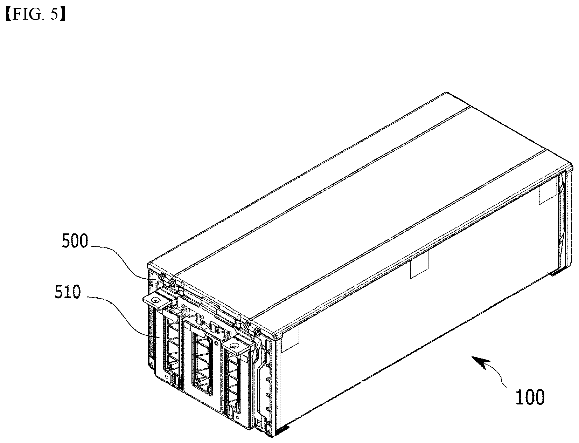

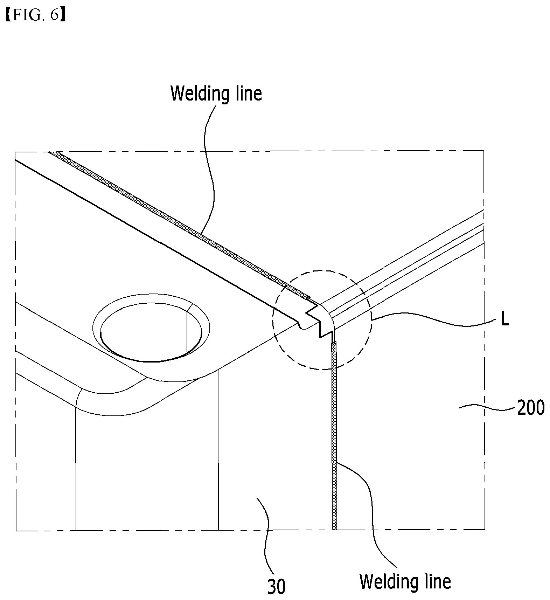

Fig. 4 is a perspective view showing a bottom part of a battery module according to one embodiment of the present disclosure. Fig. 5 is a diagram showing parts inserted into the module frame of Fig. 4. Fig. 6 is an enlarged view of a section B of Fig. 4.

Referring to Figs. 4 to 6, the battery module according to one embodiment of the present disclosure includes a battery cell stack 100 in which a plurality of battery cells are stacked, a module frame 200 for housing the battery cell stack 100, and end plates 300 for covering the front and rear surfaces of the battery cell stack 100.

The battery cell is a secondary battery, and may be configured into a pouch-type secondary battery. Such a battery cell may be composed of a plurality of cells, and the plurality of battery cells may be mutually stacked so as to be electrically connected to each other, thereby forming the battery cell stack 100. Each of the plurality of battery cells may include an electrode assembly, a cell case, and an electrode lead protruding from the electrode assembly.

The module frame 200 houses the battery cell stack 100. The battery cell stack 100 housed inside the module frame 200 can be physically protected through the module frame 200.

A busbar frame 500 is formed so as to cover the front and rear surfaces of the battery cell stack 100, is located on the front and rear surfaces of the battery cell stack 100, and can be connected with electrode leads formed to extend from the plurality of battery cells. More specifically, electrode leads extended through the busbar frame 500 are coupled to the plurality of busbars 510 mounted on the outside surface of the busbar frame 500, so that the battery cells and the busbars 510 can be electrically connected to each other.

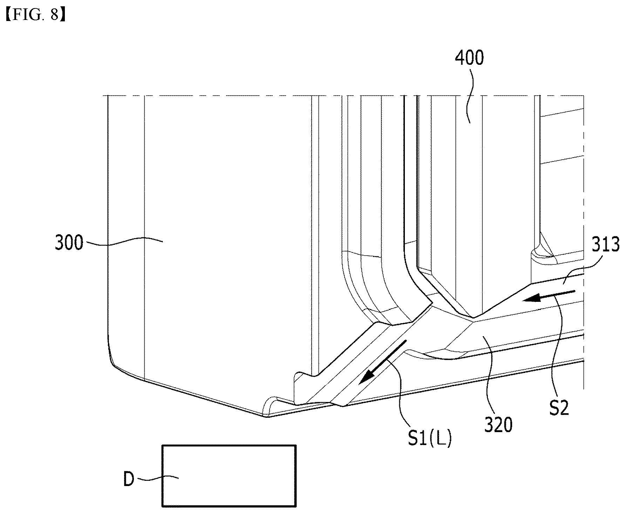

The end plates 300 are respectively formed on the outside of the busbar frame 500 on the basis of the battery cell stack 100, so that they can be formed so as to cover the battery cell stack 100 and the busbar frame 500. The busbar frame 500 may be connected to the inside lower end part 313 of the end plate 300 shown in Fig. 8.

The end plate 300 can protect the busbar frame 500, the battery cell stack 100, and various electrical equipment connected thereto from external impacts, and at the same time, guide the electrical connection between the battery cell stack 100 and an external power. An insulating cover 400 shown in Fig. 8 can be inserted between the end plate 300 and the busbar frame 500. The insulating cover 400 can cut off the electrical connection between the busbar frame 300 and the outside to ensure the insulation performance of the battery module.

According to the present embodiment, a drainage channel L may be formed at both-side lower end corner parts 310 of the end plate 300 meeting with the module frame 200. The liquid inside the battery module may be discharged to the outside through the drainage channel L.

Conventionally, a liquid discharge structure is not separately provided in the battery module, and thus, when liquid accumulates inside the battery module, the busbars connected to the battery cells may be immersed by the liquid. While the immersed busbars being corroded, a short circuit between busbars may occur. When a short circuit occurs, a fire may occur due to the short circuit, and the performance of the battery module may be deteriorated.

Therefore, according to the present embodiment, a drainage channel L is formed in both-side lower end corner parts 310 of the end plate 300, and the liquid inside the battery module can be discharged to the outside through the drainage channel L, thereby preventing a short circuit between busbars. Further, it is also possible to prevent the phenomenon that the electric components inside the module excluding the busbar are infiltrated with liquid.

Below, a drainage structure according to one embodiment of the present disclosure will be described in more detail with reference to Figs. 6 to 8.

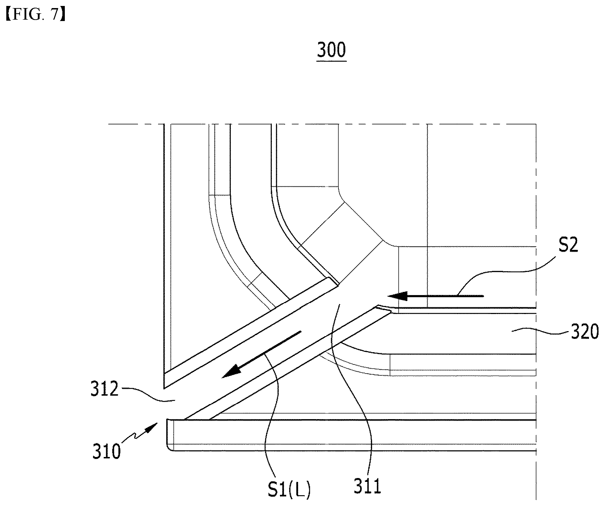

Fig. 7 is a plan view showing the inside surface of the end plate according to one embodiment of the present disclosure. Fig. 8 is a perspective view showing an inside surface of the end plate according to one embodiment of the present disclosure.

Referring to Figs. 6 to 8, in the battery module according to the present embodiment, a portion where the end plate 300 and the module frame 200 meet may be joined by welding. As shown in Fig. 6, a welding line can be formed at a region except for the portion in which the drainage channel L is formed. That is, when the end plate 300 and the module frame 200 are connected by welding, welding line may not formed at the portion where the drainage channel L is located. The both-side lower end corner parts 310 of the end plate 300 and the corner parts of the module frame 200 are the portions that have not been welded even in the related art, therefore even the drainage channel L is formed, the weld-coupling force between the end plate 300 and the module frame 200 may not be reduced.

As shown in Figs. 7 and 8, the drainage channel L is formed so as to have a first slope S1 from the inside corner part 311 of the lower end of the end plate 300 toward the outside corner part of the lower end 312. Further, the inside lower end part 313 of the end plate 300 connected to the drainage channel L may be formed so as to have a second slope S2 toward the drainage channel L. At this time, the first slope S1 may have a larger slope angle than that of the second slope S2.

According to the present embodiment, a gradient of 2 degrees may be applied to the second slope S2. The liquid formed inside the battery module may be collected at the inside lower end part 313 of the end plate 300 due to gravity. At this time, the second slope S2 of the inside lower end part 313 is formed so as to have a gradient of 2 degrees in a direction in which the drainage channel L is located, so that the liquid collected in the inside lower end part 313 may flow along the inside lower end part 313 and be flown into the drainage channel L. Since the first slope S1 of the drainage channel L has a larger slope angle than the second slope S2 of the inside lower end part 313, the liquid flown into the drainage channel L may be discharged to the outside of the battery module along the drainage channel L formed by the second slope S2.

A rim part 320 formed protrusively toward the module frame 200 is formed on the edge part of the end plate 300, and the drainage channel L may be formed in the rim part 320. Referring to Fig. 8, an upper portion of the drainage channel L and the inside lower end part 313 can be connected to the lower end part of the insulating cover 400. Therefore, condensed water, etc. formed on the surface of the insulating cover 400 flows down on the inside lower end part 313 formed on the lower side of insulating cover 400 along the surface of the insulating cover 400 due to gravity, and then can be flown into the drainage channel L along the second slope S2 of the inside lower end part 313 again.

The busbar frame 500 shown in Fig. 5 can also be connected to an upper portion of the drain channel L and the inside lower end part 313 shown in Figs. 7 and 8. Therefore, the condensed water or the like formed on the surface of the busbar frame 500 is flown down on the inside lower end part 313 formed on the lower side of the busbar frame 500, along the surface of the plurality of busbars 510 mounted on the outside of the busbar frame 500 due to gravity, and then can be flown into the drainage channel L along the second slope S2 of the inside lower end part 313 again.

Referring to Fig. 8, a drainage device D may be formed outside the drainage channel L of the battery module. The drainage device D may be connected to the drainage channel L to collect the liquid discharged to the drainage channel L, so that the liquid can be discharged to the outside of the battery pack mounted with at least one battery module.

The above-mentioned battery pack may have a structure in which one or more of the battery modules according to the embodiment of the present disclosure are gathered, and packed together with a battery management system (BMS) and a cooling device that control and manage battery's temperature, voltage, etc.

The battery pack can be applied to various devices. Such a device may be applied to a vehicle means such as an electric bicycle, an electric vehicle, or a hybrid vehicle, but the present disclosure is not limited thereto, and is applicable to various devices capable of using a battery module, which also falls under the scope of the present disclosure.

### [Description of Reference Numerals]

| | | | |
|---|---|---|---|
| 200: | module frame | 300: | end plate |
| 310: | both-side lower end corner part | L: | drainage channel |
| 311: | inside corner part of lower end | 312: | outside corner part of lower end |
| 313: | inside lower end part | 320: | rim part |
| 400: | insulating cover | 500: | busbar frame |
| 510: | busbar | D: | drainage device |
| S1: | first slope | S2: | second slope |

## Claims

1. A battery module comprising:
a battery cell stack (100) in which a plurality of battery cells are stacked;
a module frame (200) for housing the battery cell stack (100); and
an end plate (300) for covering front and rear surfaces of the battery cell stack (100),
wherein a drainage channel (L) is formed at both-side lower end corner parts of the end plate (300) meeting with the module frame (200) to discharge a liquid inside the battery module to the outside,
wherein the drainage channel (L) is formed so as to have a first slope (S1) toward an outside corner part of a lower end of the end plate (300), and an inside lower end part (313) of the end plate (300) connected to the drainage channel (L) is formed so as to have a second slope (S2) toward the drainage channel (L),
wherein the first slope (S1) has a larger slope angle than the second slope (S2),
wherein the drainage channel (L) is formed from an inside corner part (311) of the lower end of the end plate toward an outside corner part of the lower end, and
wherein a busbar frame (500) is formed on the front and rear surfaces of the battery cell stack, and
the busbar frame is connected to an upper portion of an inside lower end part of the end plate.

2. The battery module according to claim 1, wherein:
a region where the end plate (300) and the module frame (200) meet, excluding a portion where the drainage channel (L) is formed, is joined by welding.

3. The battery module according to claim 1, wherein:
a rim part (320) formed protrusively toward the module frame (200) is formed on an edge part of the end plate, and
the drainage channel (L) is formed in the rim part (320).

4. The battery module according to claim 1, wherein:
an insulating cover (400) is formed between the battery cell stack and the end plate, and
an inside lower end part (313) of the end plate is formed on a lower side of the insulating cover (400).

5. The battery module according to claim 1, wherein:
a plurality of busbars (510) are mounted on an outside surface of the busbar frame, and
the plurality of busbars are connected to the upper portion of the inside lower end part (313).

6. A battery pack comprising:
the battery module according to claim 1; and
a drainage device (D) connected to the drainage channel of the battery module.

## Patentansprüche

1. Batteriemodul, umfassend:
einen Batteriezellenstapel (100), in welchem eine Mehrzahl von Batteriezellen gestapelt ist;
einen Modulrahmen (200) zum Aufnehmen des Batteriezellenstapels (100); und
eine Endplatte (300) zum Abdecken einer vorderen und einer hinteren Fläche des Batteriezellenstapels (100),
wobei ein Drainagekanal (L) an beiden Seiten an Eckteilen des unteren Endes der Endplatte (300) gebildet ist, welche auf den Modulrahmen (200) treffen, um eine Flüssigkeit innerhalb des Batteriemoduls zu dem Äußeren abzuführen,
wobei der Drainagekanal (L) derart gebildet ist, dass er eine erste Neigung (S1) in Richtung eines äußeren Eckteils eines unteren Endes der Endplatte (300) aufweist, und wobei ein innerer unterer Endteil (313) der Endplatte (300), welcher mit dem Drainagekanal (L) verbunden ist, derart gebildet ist, dass er eine zweite Neigung (S2) in Richtung des Drainagekanals (L) aufweist,
wobei die erste Neigung (S1) einen größeren Neigungswinkel aufweist als die zweite Neigung (S2),
wobei der Drainagekanal (L) von einem inneren Eckteil (311) des unteren Endes der Endplatte in Richtung eines äußeren Eckteils des unteren Endes gebildet ist und
wobei ein Sammelschienenrahmen (500) an der vorderen und der hinteren Fläche des Batteriezellenstapels gebildet ist und
wobei der Sammelschienenrahmen mit einem oberen Abschnitt eines inneren unteren Endteils der Endplatte verbunden ist.

2. Batteriemodul nach Anspruch 1, wobei:
ein Bereich, in welchem die Endplatte (300) und der Modulrahmen (200) aufeinandertreffen, mit Ausnahme eines Abschnitts, in welchem der Drainagekanal (L) gebildet ist, durch Schweißen verbunden ist.

3. Batteriemodul nach Anspruch 1, wobei:
ein Wulstteil (320), welcher in Richtung des Modulrahmens (200) vorstehend gebildet ist, an einem Randteil der Endplatte gebildet ist und
der Drainagekanal (L) in dem Wulstteil (320) gebildet ist.

4. Batteriemodul nach Anspruch 1, wobei:
eine isolierende Abdeckung (400) zwischen dem Batteriezellenstapel und der Endplatte gebildet ist und
ein innerer unterer Endteil (313) der Endplatte an einer unteren Seite der isolierenden Abdeckung (400) gebildet ist.

5. Batteriemodul nach Anspruch 1, wobei:
eine Mehrzahl von Sammelschienen (510) an einer äußeren Fläche des Sammelschienenrahmens montiert ist und
die Mehrzahl von Sammelschienen mit dem oberen Abschnitt des inneren unteren Endteils (313) verbunden ist.

6. Batteriepack, umfassend:
das Batteriemodul nach Anspruch 1; und
eine Drainagevorrichtung (D), welche mit dem Drainagekanal des Batteriemoduls verbunden ist.

## Revendications

1. Module de batterie comprenant :
un empilement d'éléments de batterie (100) dans lequel une pluralité d'éléments de batterie sont empilés ;
un cadre de module (200) pour loger l'empilement d'éléments de batterie (100) ; et
une plaque d'extrémité (300) pour recouvrir des surfaces avant et arrière de l'empilement d'éléments de batterie (100),
dans lequel un canal de drainage (L) est formé au niveau de parties de coin d'extrémité inférieure sur les deux côtés de la plaque d'extrémité (300) rejoignant le cadre de module (200) pour évacuer un liquide à l'intérieur du module de batterie vers l'extérieur, dans lequel le canal de drainage (L) est formé de façon à posséder une première pente (S1) vers une partie de coin extérieure d'une extrémité inférieure de la plaque d'extrémité (300), et une partie d'extrémité inférieure intérieure (313) de la plaque d'extrémité (300) reliée au canal de drainage (L) est formée de façon à posséder une seconde pente (S2) vers le canal de drainage (L),
dans lequel la première pente (S1) possède un plus grand angle de pente que la seconde pente (S2),
dans lequel le canal de drainage (L) est formé à partir d'une partie de coin intérieure (311) de l'extrémité inférieure de la plaque d'extrémité vers une partie de coin extérieure de l'extrémité inférieure, et
dans lequel un cadre de barres omnibus (500) est formé sur les surfaces avant et arrière de l'empilement d'éléments de batterie, et
le cadre de barres omnibus est relié à une portion supérieure d'une partie d'extrémité inférieure intérieure de la plaque d'extrémité.

2. Module de batterie selon la revendication 1, dans lequel :
une région où la plaque d'extrémité (300) et le cadre de module (200) se rejoignent, à l'exclusion d'une portion où le canal de drainage (L) est formé, est jointe par soudage.

3. Module de batterie selon la revendication 1, dans lequel :
une partie rebord (320) formée de manière saillante vers le cadre de module (200) est formée sur une partie de bord de la plaque d'extrémité, et
le canal de drainage (L) est formé dans la partie rebord (320).

4. Module de batterie selon la revendication 1, dans lequel :
un couvercle isolant (400) est formé entre l'empilement d'éléments de batterie et la plaque d'extrémité, et
une partie d'extrémité inférieure intérieure (313) de la plaque d'extrémité est formée sur un côté inférieur du couvercle isolant (400).

5. Module de batterie selon la revendication 1, dans lequel :
une pluralité de barres omnibus (510) sont montées sur une surface extérieure du cadre de barres omnibus, et
la pluralité de barres omnibus sont reliées à la portion supérieure de la partie d'extrémité inférieure intérieure (313).

6. Bloc-batterie comprenant :
le module de batterie selon la revendication 1 ; et
un dispositif de drainage (D) relié au canal de drainage du module de batterie.
